(19) Europäisches Patentamt
European Patent Office
Office européen des brevets

(11) **EP 1 467 530 B1**

(12) **EUROPÄISCHE PATENTSCHRIFT**

(45) Veröffentlichungstag und Bekanntmachung des Hinweises auf die Patenterteilung:
**24.03.2010 Patentblatt 2010/12**

(51) Int Cl.:
***H04L 25/03*** *(2006.01)*

(21) Anmeldenummer: **04008028.5**

(22) Anmeldetag: **02.04.2004**

(54) **Nichtkooperative blinde Entzerrung von quadratur-amplituden-modulierten Signalen**

Non-cooperative blind equalisation of QAM signals

Egalisation aveugle non-coopérative de signaux MAQ

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.04.2003 DE 10316962**

(43) Veröffentlichungstag der Anmeldung:
**13.10.2004 Patentblatt 2004/42**

(73) Patentinhaber: **EADS Deutschland GmbH**
**85521 Ottobrunn (DE)**

(72) Erfinder: **Demissie, Bruno, Dr.**
**53474 Bad Neuenahr-Ahrweiler (DE)**

(74) Vertreter: **Meel, Thomas et al**
**EADS Deutschland GmbH**
**Patentabteilung DSLAIP1**
**88039 Friedrichshafen (DE)**

(56) Entgegenhaltungen:
- **ALLE-JAN VAN DER VEEN ET AL: "A subspace approach to blind spacetime signal processing for wireless communication systems" IEEE TRANSACTIONS ON SIGNAL PROCESSING, IEEE SERVICE CENTER, NEW YORK, NY, US, Bd. 45, Nr. 1, Januar 1997 (1997-01), XP011057681 ISSN: 1053-587X**
- **HUI LIU ET AL: "A deterministic approach to blind symbol estimation" CONFERENCE RECORD OF THE TWENTY-EIGHTH ASILOMAR CONFERENCE ON SIGNALS, SYSTEMS AND COMPUTERS, Bd. 2, 31. Oktober 1994 (1994-10-31), Seiten 1164-1168, XP010148761 PACIFIC GROVE, CA, USA ISBN: 0-8186-6405-3**
- **SHILPA TALWAR ET AL: "Blind Separation of Synchronous Co-Channel Digital Signals Using an Antenna Array-Part I: Algorithms" IEEE TRANSACTIONS ON SIGNAL PROCESSING, IEEE SERVICE CENTER, NEW YORK, NY, US, Bd. 44, Nr. 5, Mai 1996 (1996-05), XP011057439 ISSN: 1053-587X**
- **VANDAELE P ET AL: "Implementation of an RTLS blind equalization algorithm on DSP" NINTH INTERNATIONAL WORKSHOP ON RAPID SYSTEM PROTOTYPING, LEUVEN, BELGIUM, 3. Juni 1998 (1998-06-03), Seiten 150-155, XP010283202 LOS ALAMITOS, CA, USA ISBN: 0-8186-8479-8**
- **PHILIPPE LEMMERLING ET AL: "On the Equivalence of Constrained Total Least Squares and Structured Total Least Squares" IEEE TRANSACTIONS ON SIGNAL PROCESSING, Bd. 44, Nr. 11, November 1996 (1996-11), XP011057605 NY, US ISSN: 1053-587X**
- **DEGROAT R D ET AL: "The data least squares problem and channel equalization" IEEE TRANSACTIONS ON SIGNAL PROCESSING USA, Bd. 41, Nr. 1, Januar 1993 (1993-01), Seiten 407-411, XP002411863 ISSN: 1053-587X**
- **LEMMERLING P ET AL: "Fast algorithm for solving the Hankel/Toeplitz structured total least squares problem" NUMERICAL ALGORITHMS BALTZER NETHERLANDS, Bd. 23, Nr. 4, 2000, Seiten 371-392, XP002411864 ISSN: 1017-1398**

**Beschreibung**

Die Erfindung bezieht sich auf ein Verfahren zur nichtkooperativen blinden Entzerrung von digitalen quadratur-amplituden-modulierten Signalen.

Ein häufig auftretendes Problem bei der digitalen Signalübertragung von einem Sender zu einem Empfänger ist, dass das Signal auf dem Übertragungsweg verzerrt und verrauscht wird. Je nach physikalischen Eigenschaften des Übertragungsmediums treten unterschiedliche Effekte auf, die die Verzerrungen verursachen, wie z.B. Mehrwegeausbreitung und diffuse Streuung. Formell werden alle Arten der linearen Verzerrungen durch das Übertragungsmedium in einer Kanalimpulsantwort $h(\cdot)$ zusammengefasst, in die man meistens auch noch die Formfilter des Senders sowie des Empfängers einschließt. Das empfangene Signal ist dann die Faltung des Sendesignals mit dieser Kanalimpulsantwort:

$$x(t) = \int h(\tau)s(t-\tau)d\tau \;\; = \;\; h(t) * s(t)$$

Sind die zeitlichen Wegunterschiede bei der Mehrwegeausbreitung größer als die Symboldauer des digitalen Signals, so kommt es zur Intersymbolinterferenz, da das Spektrum des gesendeten Signals mit der Fouriertransformierten der Kanalimpulsantwort multipliziert wird. Oft sind die Kanalimpulsantworten ihrerseits noch zeitabhängig, wie man es z.B. in der Kurzwellenübertragung über die Ionosphäre wie auch im Mobilfunk bei bewegten Sendern/Empfängern vorfindet. Der Übertragungskanal ist dann nur annähernd über eine Zeitdauer, die einigen wenigen digitalen Symbolen entspricht, konstant.

Bei der autorisierten Signalübertragung werden üblicherweise deshalb zunächst Trainingssequenzen übertragen, aus denen der Empfänger die Kanalantwort ermittelt und so den Kanal entzerren kann. Allerdings büßt man aber an effektiver Nutzübertragungsrate ein. Es wäre deshalb wünschenswert einen blinden Entzerrer zu haben, der ohne Trainingssequenzen direkt das Signal entzerren kann. Falls der Empfänger nichtkooperativ ist, so bleibt ihm auf jeden Fall nur die blinde Entzerrung übrig, d.h. ohne Kenntnis der Kanalantwort.

Das Problem besteht nun darin, ein Verfahren zu erfinden, das schnell zeitveränderliche, frequenzselektive und verrauschte Kanäle mit möglichst geringer Bitfehlerrate (BER) blind entzerren kann und das in einer aktzeptablen Rechenzeit.

Im Stand der Technik existiert eine Vielzahl von Verfahren zur blinden Entzerrung, die aber im Einzelnen große Nachteile besitzen und die oben genannten Anforderungen nur zum Teil erfüllen (Eine Übersicht findet sich auch in dem Sonderheft [1]).

Eines der historisch ältesten Verfahren ist der Constant-Modulus-Algorithmus (CMA), siehe [2]: Dieser Algorithmus minimiert ein Funktional der Sendedaten dahin, dass sie stationäre Amplitude besitzen. Annahme ist dabei, dass das gesendete Signal einer Quadratur-Amplitudenmodulation entstammte. Der Nachteil dieses Verfahrens ist, dass es sich nicht schnell genug an schnell zeitveränderliche Kanäle anpassen kann. Es eignet sich deshalb nur für den Einsatz in zeitinvarianten bzw. schwach zeitvarianten Systemen.

Ein bekanntes Verfahren mit der niedrigst möglichen Bitfehlerrate ist das sogenannte deterministische Maximum-Likelihood (DML) Verfahren. Dabei wird das Funktional

$$d_{ML}(h, s) = \| x - h * s \|^2$$

über dem Raum der Funktionen h, s minimiert. Diskretisiert man h, s

$$d_{ML}(h, s) = \| \mathbf{x} - \mathcal{S}\mathbf{h} \|^2 = \| \mathbf{x} - \mathcal{H}\mathbf{s} \|^2,$$

mit entsprechenden Hankel- und Blockmatrizen S,H, gebildet aus der Symbolsequenz und der Kanalantwort (s.u.) [10], ist es immer noch eine hochdimensionale Minimumssuche, die in Praxis viel zu rechenaufwendig ist. In [10] werden deshalb sogenannte Sub-Space-Verfahren vorgeschlagen. Keine dieser in [10] vorgeschlagenen Verfahren liefert jedoch eine Faktorisierung $X = HS,$ bei der beide Faktoren die notwendige Toeplitz- oder Hankelstruktur aufweisen.

Für Sendedaten, die einem endlichen Alphabet entstammen, schlug Seshadri [3] ein Verfahren vor, welches das Problem in ein ML-Viterbi-Verfahren für die Symbolsequenz und ein Least-Squares (LS)-Problem für die Kanalantwort aufteilt. Ein ähnliches, iteratives Verfahren stammt von Gosh und Weber [4], welches zwischen der Kanalantwort und der Symbolsequenz hin und her iteriert, nachdem ein Startwert für die Kanalantwort gefunden wurde: Im k-ten Schritt berechnet man dazu

$$s^{(k)} = \underset{s}{\operatorname{argmin}} \| x - \mathcal{H}(h^{(k)})s \|^2 \,.$$

$$h^{(k+1)} = \underset{h}{\operatorname{argmin}} \| x - \mathcal{S}(s^{(k)})h \|^2 \,.$$

Die zweite Optimierung ist ein lineares LS-Problem, wohingegen die erste durch einen Viterbi Algorithmus erreicht werden kann. In jüngster Zeit wurde dieser Ansatz wieder aufgegriffen, allerdings ohne die Spezialisierung auf ein endliches Alphabet, wobei man zwischen zwei LS-Problemen iteriert [5]. Das Problem bei diesen Lösungsansätzen ist die hinreichend genaue Schätzung des Startwertes für h, da sonst keine Konvergenz garantiert ist. Außerdem ist der Viterbi-Algorithmus recht zeitaufwendig.

Eine andere Klasse von Entzerrern basiert auf statistischen Annahmen über das Sendesignal. Der Vorreiter dieses Ansatzes bildet eine Arbeit von Tong, Xu und Kailath [6] aus dem Jahre 1991. Inzwischen wurden weit über hundert Arbeiten zu diesem Thema veröffentlicht. Es wird bei diesem Verfahren vorausgesetzt, dass die Symbole untereinander unkorreliert sind. Unter dieser Annahme lässt sich aus der Autokorrelationsfunktion des Empfangssignals die Autokorrelationsfunktion der Kanalimpulsantwort ermitteln. Aus letzterer erhält man dann bis auf eine Phasenunsicherheit die Kanalimpulsantwort selber, mit der man dann mit bekannten, nichtblinden Verfahren den Kanal entzerren kann. Der Nachteil dieser Verfahren ist, dass man zur hinreichend genauen Berechnung der Kanalimpulsantwort unter den statistischen Annahmen eine recht große Anzahl an Symbolen benötigt. Oft muss aber der Kanal aus einem sehr kurzen Zeitabschnitt des Empfangssignal identifiziert werden, dann wird die Annahme der statistischen Verteilung der Symbole unbrauchbar, da eine zu kurze Datensequenz keine statistisch vernünftigen Momente ergeben kann. Daher sind unter praktischen Überlegungen diese Verfahren nicht einsetzbar.

Die jüngste Klasse von Entzerrern sind sogenannte deterministische Verfahren, deren typischster Vertreter das Verfahren nach Liu und Xu [7] ist. Sie errechnen aus kurzen Signalsegmenten, mindestens von der doppelten Länge der Kanalimpulsantwort, welche sich gewöhnlicherweise über wenige Symbole erstreckt, direkt die gesendeten Symbole. Dadurch eignen sie sich auch besonders für schnell zeitvariante Kanäle. Weiter unten wird solch ein deterministisches Verfahren ausführlich dargestellt, da es als Basis für die weiteren Ausführungen der Erfindung dient. Der Nachteil dieses deterministischen Verfahrens ist, dass es noch nicht den Maximum-Likelihood-Abstand $d_{ML}$ (**h, s**) minimiert und somit die Bitfehlerrate noch nicht kleinstmöglich ist.

In [11] wird die Methode des Structured Total Least Squares (STLS) zur Lösung des Problems Ax = b für die Fälle, dass A entweder Toeplitz-Struktur oder Hankelstruktur aufweist, vorgeschlagen. Ziel ist es, den Vektor x zu ermitteln. Dabei wird vorausgesetzt, dass die Matrix A sowie der Vektor b fehlerbehaftete Messgrößen, also keine unbekannten Größen, sind.

[12] beschreibt ein weiteres Verfahren zur blinden, nichtkooperativen Entzerrung von Signalen. Das Verfahren besteht aus zwei Schritten: der erste Schritt ist eine deterministische Prozedur zur Ermittlung einer Näherung für die Symbolsequenz. Dieser ist (bis auf eine Änderung der Reihenfolge der Indices) identisch mit dem Verfahren nach Liu und Xu [7]. Im zweiten Schritt wird ein RTLS (Recursive Total Least Squares) -Verfahren benutzt, um den Fehler, der sich nach dem SVD-Schritt für den Rauschraum ergibt, zu berücksichtigen. Das Verfahren versucht lediglich, die Toeplitz-Struktur der Symbolmatrix S herzustellen. Die Kanalmatrix H wird in diesem Verfahren nicht berücksichtigt, ebenso nicht die Minimierung des Likelihood-Abstands |*X-HS*|.

[13] behandelt den Einsatz der Total-Least-Square (TLS) -Methode zur Kanalschätzung bei Kenntnis einer Trainingssequenz, also bei der nicht-blinden Entzerrung. Dieses Problem unterscheidet sich maßgeblich von der blinden Entzerrung, bei dem weder der Kanal noch die gesendeten Symbole bekannt sind.

Die Erfindung stellt sich die Aufgabe, ein Verfahren zur blinden Entzerrung von digitalen quadratur-amplitudenmodulierten Signalen mit unbekannten Parametern anzugeben, wobei das Verfahren möglichst optimal im Maximum-Likelihood Sinne ist und außerdem einen so kleinen Rechenaufwand hat, dass die Verarbeitungsschritte mit der Taktrate schritthaltend, d.h. online, in der nach dem Verfahren gesteuerten Einrichtung durchgeführt werden können.

Die Lösung der Aufgabe wird mit einem Verfahren nach Anspruch 1 gelöst.

Die Erfindung wird durch die Unteransprüche in vorteilhafter Weise weiter ausgebildet.

Das erfindungsgemäße neue Verfahren verfolgt folgende Strategie: In einer ersten Stufe berechnet es zunächst nach dem bekannten deterministischen Verfahren die Symbolsequenz s. Danach werden die oben angegebenen ML-Gleichungen iteriert. Anders als diese Gleichungen jeweils als LS-Problem für einerseits h oder s aufzufassen, werden hier die ML-Gleichungen allerdings als 'structured total least squares' (STLS) [8] Problem behandelt. Damit nähert man sich dem Minimum von $d_{ML}(h, s)$ entsprechend schneller. Konkret bedeutet das, dass z.B. h sowie eine Korrekturmatrix $E_S$ berechnet werden, wobei $E_S$ dieselbe Struktur wie $S$ besitzt, indem folgendes Funktional minimiert wird

$$\min_{\mathbf{h},\mathbf{E}_\mathcal{S}}\|[\lambda\mathbf{E}_\mathcal{S}|\mathbf{x} - (\mathcal{S} + \mathbf{E}_\mathcal{S})\mathbf{h}]\|_F\,,$$

wobei $\lambda$ ein Gewichtungsfaktor ist, der bestimmt wie stark die Änderung $E_S$ der strukturierten Matrix $S$ ist.

Der Gewinn in diesem Verfahren gegenüber der Methode der LS-Iteration liegt in der schnelleren Konvergenz und damit geringeren Rechenzeit. Monte-Carlo-Simulationen zeigen, dass für kleines $\lambda$ bereits nach der 1. Iteration der Restfehler so klein ist wie der nach wesentlich mehr Iterationen mit dem LS-Verfahren.

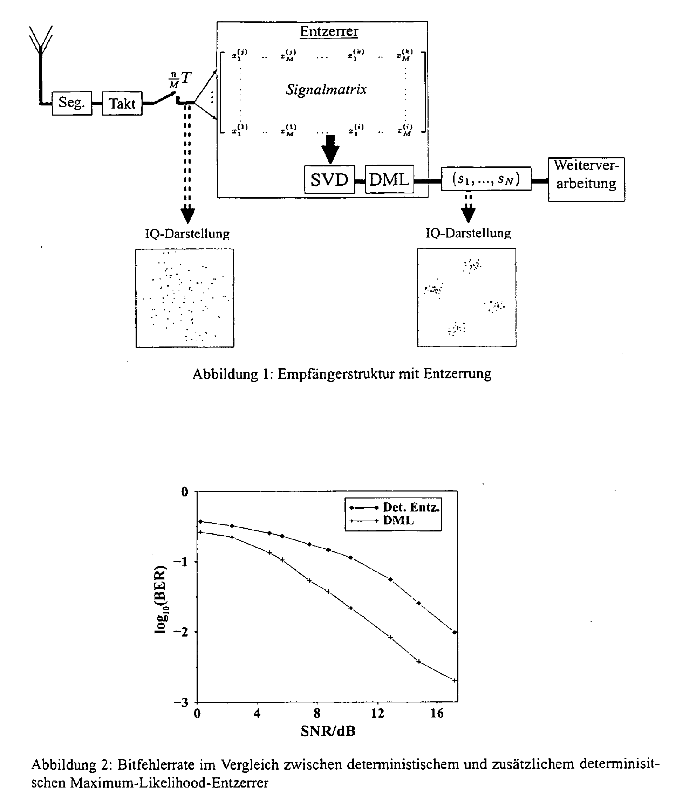

Im Folgenden wird die Erfindung konkret beschrieben und danach anhand Abbildung 1 erklärt.

Abbildung 1 zeigt eine Empfängerstruktur mit verfahrensgemäßer Entzerrung von empfangenen Signaldaten.

Abschließend zeigt Abbildung 2 eine Darstellung der Performanz der nach dem erfindungsgemäßen Verfahren durchgeführten Entzerrung im Vergleich mit einem herkömmlichen Verfahren.

Zunächst wird das Datenmodel für die Empfangsdaten definiert, um danach auf die einzelnen Schritte des Verfahrens einzugehen. Die oben angegebene Faltungsgleichung für das Empfangssignal für eine lineare digitale Modulationsart über einen linearen Kanal mit additivem Rauschen lautet explizit

$$x(t) = \sum_k h(t - k \cdot T)s(k) + n(t)$$

wobei $s(\cdot)$ die übertragenen Symbole sind, $T$ die Symboldauer, $h(t)$ die zusammengesetzte Kanalimpulsantwort, welche das Sendefilter, Kanalfilter sowie das Empfangsfilter einschließt, und $n(\cdot)$ additives Rauschen ist. Es wird vorrausgesetzt, dass der Kanal eine endliche Länge von ungefähr $L \cdot T$ hat, wobei $L$ ein Integer ist.

Überabtastet man das Signal mit einer Rate M, so sind die Abtastzeitpunkte des Empfangssignals $t = t_0 + (k + (r - 1)/M)T$ für Integer $k$ und $r = 1, 2, ..., M$. In der sogenannten Polyphasenformulierung

$$x_r(k) = x\left(t_0 + \left(k + \frac{r-1}{M}\right)T\right)$$

$$h_r(k) = h\left(t_0 + \left(k + \frac{r-1}{M}\right)T\right)$$

$$n_r(k) = n\left(t_0 + \left(k + \frac{r-1}{M}\right)T\right)$$

kann man das überabgetastet empfangene Signal als Ausgang eines $M$-fachen Kanals ansehen, der mit der Symbolrate abgetastet wird:

$$\mathbf{x}_k = \begin{bmatrix} x_1(k) \\ \vdots \\ \vdots \\ x_M(k) \end{bmatrix} = \underbrace{\begin{bmatrix} h_1(L) & \cdots & h_1(1) & h_1(0) \\ \vdots & & & \vdots \\ \vdots & & & \vdots \\ h_M(L) & \cdots & h_M(1) & h_M(0) \end{bmatrix}}_{H} \begin{bmatrix} s(k - L) \\ \vdots \\ \vdots \\ s(k) \end{bmatrix}$$

Diese Formulierung eines überabgetasteten Signals ist äquivalent zum Empfang über ein Antennenarray mit $M$ Elementen. Die Formulierung lässt sich auch auf den Gebrauch eines Antennenarrays zusammen mit Überabtastung erweitern. Dann wäre $M$ das Produkt aus räumlicher und zeitlicher Überabtastung. Mit den obigen Formeln läßt sich

folgendes Datenmodell aufstellen:

$$\begin{bmatrix} \mathbf{x}_1 & \cdots & \mathbf{x}_j \\ \mathbf{x}_2 & \cdots & \mathbf{x}_{j+1} \\ \vdots & & \vdots \\ \mathbf{x}_i & \cdots & \mathbf{x}_{j+i-1} \end{bmatrix} = \begin{bmatrix} H & 0 & 0 & \cdots \\ 0 & H & 0 & \cdots \\ & & \ddots & \\ 0 & 0 & \cdots & H \end{bmatrix} \begin{bmatrix} s(1-L) & \cdots & s(j-L) \\ s(2-L) & \cdots & s(1-L+j) \\ \vdots & & \vdots \\ s(i) & \cdots & s(i+j-1) \end{bmatrix}$$

oder kurz

$$\mathbf{X} = \mathcal{H}\mathbf{S}$$

mit entsprechenden Definitionen für X, H, S.

**Darstellung und Maximum-Likelihood-Diskussion des deterministischen Entzerrers nach Liu und Xu**

Es ist nun die Aufgabe, die Matrix S allein aus der Kenntnis der Signalmatrix X zu ermitteln. Es wird zunächst die originale Vorgehensweise von Liu und Xu [7] dargestellt. Später diskutieren wir dann anhand einer Maximum-Likelihood Ableitung dieser Lösung deren Unzulänglichkeiten und die Inkonsistenz, die sich daraus ergibt.

**Determinisitscher Entzerrer nach Liu und Xu**

Die Idee des deterministischen Entzerrers nach Liu und Xu ist nun, aus dem Zeilenraum der Signalmatrix die Elemente der hankelartigen Symbolmatrix zu berechnen. Dafür müssen die Kanalmatrix H vollen Spaltenrang sowie die Symbolmatrix S vollen Zeilenrang $L + i$ besitzen.

Deshalb ist der Integer $i$ groß genug zu wählen, also $M \cdot i > L + i$, was in Praxis für hinreichend großes $i$ sehr wahrscheinlich gegeben ist. Der Kanal sowie die gesendeten Symbole müssen ebenso bestimmte Eigenschaften erfüllen, siehe [7], die aber in Praxis sehr wahrscheinlich erfüllt sind.

Die Signalmatrix $\mathbf{X} \in \mathbb{C}^{M \cdot i \times j}$, wobei $j = N - i - L + 1$ und $N$ die Länge des betrachteten Sendeblocks ist, sollte die Gestalt einer 'breiten und kurzen' Matrix haben, also $j > M \cdot i$. Dann läßt sich aus ihr durch eine Singular Value Decomposition (SVD) (siehe [9]) der Zeilenraum von X berechnen, der auch zugleich der Zeilenraum von S ist:

$$\begin{aligned} \mathbf{X} &= \mathbf{U} \cdot \mathbf{\Sigma} \cdot \mathbf{V}^H \\ &= \begin{bmatrix} \mathbf{U}^s & \mathbf{U}^\perp \end{bmatrix} \cdot \begin{bmatrix} \mathbf{\Sigma}^s & 0 \\ 0 & \mathbf{\Sigma}^\perp \end{bmatrix} \cdot \begin{bmatrix} \mathbf{V}^{sH} \\ \mathbf{V}^{\perp H} \end{bmatrix} \end{aligned}$$

Ohne Rauschen hat die Signalmatrix Rang $L + i$ und die Diagonalmatrix $\Sigma$ hat dementsprechend viele von Null verschiedene Einträge. Durch Rauschen wachsen die ursprünglich verschwindenden Singulärwerte an und können die 'wahren' Singulärwerte sogar übertreffen. Es sei angenommen, dass die wahren $L + i$ Singulärwerte sich von den rauschverursachten Singulärwerten abheben, sodass sich dadurch die Kanalordnung ermitteln läßt.

In Praxis ist es so, dass wenn die Rauschsingulärwerte die Größe des kleinsten wirklichen Singulärwertes erreichen, der Algorithmus versagt, auch wenn man die Ordnung $L$ richtig geschätzt hatte. Da dieser Algorithmus aber nur als gute Initialisierung für das nachfolgende iterative Verfahren dient, ist dieser Umstand nicht von so gravierender Bedeutung.

Die Symbole werden nun aus der Forderung ermittelt, dass die einzelnen Zeilen von S senkrecht auf dem Raum $V^\perp$ stehen, der seinerseits senkrecht auf dem Zeilenraum $V^s$ steht, d.h.

$$\min_{\mathbf{S}} \|\mathbf{S} \cdot \mathbf{V}^\perp\|$$

Wenn man die Hankelstruktur der Symbolmatrix erzwingen möchte, dann läßt sich obiges Problem zu

$$\min_{\mathbf{s}} \| \mathbf{s}^t \cdot \begin{bmatrix} \mathbf{V}^\perp & 0 & \cdots & 0 \\ 0 & \mathbf{V}^\perp & & \\ \vdots & & \ddots & \\ 0 & & & \mathbf{V}^\perp \end{bmatrix} \|$$

mit s = $(s(1 - L), ...., s(N + 1 - L))^t$ umschreiben. Die gesuchte Symbolsequenz ist gleich dem linken singulären Vektor korrespondierend zu dem kleinsten Singulärwert obiger Matrix, die aus dem Raum $V^\perp$ konstruiert wurde.

**Deterministische Kanalidentifikation**

Hier werden aus dem Spaltenraum der Signalmatrix die Elemente der Blockmatrix H berechnet. Es gelten die Voraussetzungen wie oben angegeben. Die Singulärwertzerlegung der Signalmatrix sei wie oben angegeben.

Die Kanalimpulsantwort wird nun aus der Forderung ermittelt, dass die einzelnen Spalten von H senkrecht auf dem Raum $U^\perp$ stehen, der seinerseits senkrecht auf dem Spaltenraum $U^s$ steht, d.h.

$$\min_{\mathcal{H}} \| \mathcal{H} \cdot \mathbf{U}^\perp \|$$

Wenn man die spezielle Blockstruktur der Kanalmatrix erzwingen möchte, dann läßt sich obiges Problem zu

$$\min_{\mathbf{h}'} \| \mathbf{h}'^t \cdot \mathcal{U}_{U\perp}^c \|$$

mit h' = $(h_1(L), .., h_M(L), ...., h_1(0), ..h_M(0))^t$ und

$$\mathcal{U}_{U\perp}^c(1 : M(L+1), :) = \mathcal{U}_{U\perp}(M(i-1)+1 : M(L+i), :)$$

$$\mathcal{U}_{U\perp} = \begin{bmatrix} 0 & & & & 0_{M\times(Mi-L-i)} & \\ \vdots & & & & & \mathbf{U}^\perp \\ \vdots & & & & \mathbf{U}^\perp & \\ \vdots & & \mathbf{U}^\perp & & & \\ \mathbf{U}^\perp & & & \cdots & & 0 \\ & 0_{M\times(Mi-L-i)} & & & & \end{bmatrix}$$

umschreiben. Der gesuchte Vektor h' ist gleich dem linken singulären Vektor korrespondierend zu dem kleinsten Singulärwert von $\mathcal{U}_{U\perp}^c$, die aus dem Raum $U^\perp$ konstruiert wurde.

**Maximum-Likelihood-Analyse**

Die Lösung nach Liu und Xu kann auch aus einer Maximum-Likelihood Bedingung abgeleitet werden. Sie ergibt sich wenn man folgenden Abstand

$$d_{ML} = \min_{\mathcal{H},\mathbf{S}} \|\mathbf{X} - \mathcal{H}\mathbf{S}\|_F$$

minimiert. Unter der Annahme, dass eine Matrix $W$ existiert, so dass $W \cdot$ H = II ergibt sich

$$\begin{aligned} d_{ML} &= \min_{\mathcal{W},\mathbf{S}} \|\mathcal{W}\mathbf{X} - \mathbf{S}\|_F \\ &= \min_{\mathcal{W},\mathbf{S}} \|\mathbf{S}^H - \mathbf{X}^H \mathcal{W}^H\|_F \end{aligned}$$

Für Gln. 13 läßt sich das optimale $W$ ausrechnen. Wenn man die Signalmatrix als nicht fehlerbehaftet annimmt, dann läßt sich die LS-Lösung durch die Moore-Penrose Pseudoinverse berechnen:

$$\mathcal{W} = ((\mathbf{X}^H)^\dagger \mathbf{S}^H)^H$$

Eingesetzt in obiges Minimierungsproblem ergibt sich:

$$\begin{aligned} d_{ML} &= \min_{\mathbf{S}} \|\mathbf{S}(\mathbb{I} - ((\mathbf{X}^H)^\dagger)^H \mathbf{X})\| \\ &= \min_{\mathbf{S}} \|\mathbf{S}(\mathbb{I} - \mathbf{V}^s \mathbf{V}^{sH})\| \\ &= \min_{\mathbf{S}} \|\mathbf{S}\mathbf{P}^\perp_{\mathrm{ran}(X^H)}\| \end{aligned}$$

wobei $\mathbf{P}^\perp_{\mathrm{ran}(X^H)}$ der Projektor auf den Raum orthogonal zum Zeilenraum der Signalmatrix ist. Man kommt also zu derselben Bedingung wie in Gleichung (7). Bei dieser Ableitung wurde die LS-Lösung für W benutzt. Allerdings, falls die Signalmatrix verrauscht ist, muss die Inverse der Kanalmatrix nach dem Verfahren der Total Least Squares (TLS) ([9]) berechnet werden. Damit lässt sich der Maximum-Likelihood Abstand noch weiter minimieren. In anderen Worten, die deterministische Lösung nach Liu und Xu bietet noch Potenzial für Verbesserungen bezüglich ihrer Performanz unter Rauschen.

Dass die deterministische Lösung noch nicht optimal ist, sieht man auch experimentell an der Tatsache, dass wenn man H, S nach obigen Verfahren berechnet und dann den sich ergebenden Abstand

$$d_{\mathcal{H},\mathcal{S}} = \|\mathbf{X}_{\mathrm{exact}} - \mathcal{H}\mathbf{S}\|^2$$

mit dem Abstand des empfangenem verrauschten Signals zum exakten Signal

$$d_n = \|\mathbf{X}_{\mathrm{exact}} - \mathbf{X}\|^2$$

vergleicht. Es stellt sich heraus, dass

$$d_{\mathcal{H},\mathcal{S}} >> d_n .$$

Die Matrizen H, S haben zwar die richtige Struktur, aber sie liegen aufgrund des Rauschens nicht genau in dem Spalten- bzw. Zeilenraum der exakten Signalmatrix, wodurch sich ein viel zu hoher Abstand $d_{H,S}$ einstellt.

**Darstellung des eigenen Verfahrens**

Wird das obige Datenmodell für den Spezialfall $j = 1$ verwendet, dann erhält man ein Gleichungssystem mit einem Symbolvektor $s = (s(1 - L), ..., s(i))^t$ und dem Signalvektor $x = (x^t_1, ..., x^t_i)^t$:

$$\mathbf{x} = \mathcal{H}\mathbf{s}$$

Andererseits kann man die rechte Seite aber auch derart umformen, dass die Kanalantwort auf der rechten Seite in rein vektorieller Form steht, wobei dann die Symbole in einer Matrix untergebracht sind, die eine spezielle Struktur aufweist.

$$\begin{bmatrix} x_1(1) \\ \vdots \\ x_M(1) \\ \vdots \\ \vdots \\ x_1(i) \\ \vdots \\ x_M(i) \end{bmatrix} = \begin{bmatrix} s_{1-L}\cdots s_1 & 0 & & 0 \\ & & \ddots & \\ 0 & 0 & s_{1-L}\cdots s_1 \\ & \vdots & & \\ & \vdots & & \\ s_{i-L}\cdots s_i & 0 & & 0 \\ & & \ddots & \\ 0 & 0 & s_{i-L}\cdots s_i \end{bmatrix} \begin{bmatrix} h_1(L) \\ \vdots \\ h_1(0) \\ \vdots \\ \vdots \\ h_M(L) \\ \vdots \\ h_M(0) \end{bmatrix}$$

oder kurz mit dem Kanalvektor $h = (h_1(L), .., h_1(0), ...., h_M(L), .., H_M(0))^t$

$$\mathbf{x} = \mathcal{S}\mathbf{h}$$

Das Verfahren besteht nun darin, zuerst nach einer deterministischen Prozedur (vgl. oben, [7]) die Symbolsequenz s zu bestimmen und dann in einem zweiten Schritt die DML-Gleichungen

$$\min\|\mathbf{x} - \mathcal{S}\mathbf{h}\|$$

$$\min\|\mathbf{x} - \mathcal{H}\mathbf{s}\|$$

abwechselnd iterativ nach der Methode der 'structured total least squares' (STLS) [8] mit einem konvergenzbeschleunigendem Parameter $\lambda$ zu lösen.
Konkret sieht der zweite Schritt so aus, dass abwechselnd nach den Lösungen von

$$\min_{\mathbf{E}_\mathcal{S},\mathbf{h}}\|[\lambda\mathbf{E}_\mathcal{S}| - \mathbf{r}_h]\|_F \quad \text{mit} \quad \mathbf{r}_h = \mathbf{x} - (\mathcal{S} + \mathbf{E}_\mathcal{S})\mathbf{h}$$

$$\min_{\mathbf{E}_\mathcal{H},\mathbf{s}}\|[\lambda\mathbf{E}_\mathcal{H}| - \mathbf{r}_s]\|_F \quad \text{mit} \quad \mathbf{r}_s = \mathbf{x} - (\mathcal{H} + \mathbf{E}_\mathcal{H})\mathbf{s}$$

gesucht wird. Im Vergleich zum ursprünglichen Problem werden jetzt auch die Matrizen H, S geringfügig variiert, um den jeweiligen Abstand zu dem Signal zu verkleinern.

Im Folgenden wird die Anwendung der Methode der STLS [8] auf den zweiten Schritt der blinden Entzerrung im Detail beschrieben: Faßt man die unabhängigen Elemente der Korrekturmatrizen $E_H$, $E_S$ in den Vektoren $\alpha_h$, $\alpha_s$ zusammen, dann sind die Restfehlervektoren $r_h$, $r_s$ alleine Funktionen von (h, $\alpha_s$) sowie (s, $\alpha_h$). Nun seien $D_h$, $D_s$ diagonale Gewichtungsmatrizen, die der Anzahl der Elemente von $\alpha_h$, $\alpha_s$ in $E_H$, $E_S$ Rechnung tragen. Diese Gewichtungsmatrizen besitzen darüberhinaus einen globalen Faktor A, mit dem man die Konvergenz steuern kann: Ist $\lambda$ viel kleiner als eins, so werden größere Änderungen in $\alpha_h$, $\alpha_s$ erzwungen. Dann wird obiges Problem zu

$$\min_{\alpha_s,\mathbf{h}} \left\| \left[ \begin{array}{c} \mathbf{r}_h(\alpha_s,\mathbf{h}) \\ \mathbf{D}_s^{(\lambda)}\alpha_s \end{array} \right] \right\|_2 \quad , \quad \min_{\alpha_h,\mathbf{s}} \left\| \left[ \begin{array}{c} \mathbf{r}_s(\alpha_h,\mathbf{s}) \\ \mathbf{D}_h^{(\lambda)}\alpha_h \end{array} \right] \right\|_2$$

Um diese Gleichungen zu lösen, führt man eine Linearisierung von $r_h(\alpha_s, h)$ und $r_s(\alpha_h, s)$ durch. Dabei sei $\Delta h$ eine kleine Änderung von h und $\Delta s$ entsprechend für s. Des weiteren seien $\Delta_{\alpha h}$ und $\Delta_{\alpha s}$ kleine Abweichungen zu $\alpha_h$ und $\alpha_s$. Ferner seien $\Delta E_H$ und $\Delta E_S$ kleine Änderungen von $E_H$ und $E_S$. Dann kann man die Abstände $r_h$, $r_s$ entwickeln:

$$\begin{aligned} \mathbf{r}_h(\alpha_s + \triangle\alpha_s, \mathbf{h} + \triangle\mathbf{h}) &= \mathbf{x} - (\mathcal{S} + \mathbf{E}_\mathcal{S} + \triangle\mathbf{E}_\mathcal{S})(\mathbf{h} + \triangle\mathbf{h}) \\ &\approx \mathbf{r}_h(\alpha_s, \mathbf{h}) - \mathcal{H}_E\triangle\alpha_s - (\mathcal{S} + \mathbf{E}_\mathcal{S})\triangle\mathbf{h}, \end{aligned}$$

$$\begin{aligned} \mathbf{r}_s(\alpha_h + \triangle\alpha_h, \mathbf{s} + \triangle\mathbf{s}) &= \mathbf{x} - (\mathcal{H} + \mathbf{E}_\mathcal{H} + \triangle\mathbf{E}_\mathcal{H})(\mathbf{s} + \triangle\mathbf{s}) \\ &\approx \mathbf{r}_s(\alpha_h, \mathbf{s}) - \mathcal{S}_E\triangle\alpha_h - (\mathcal{H} + \mathbf{E}_\mathcal{H})\triangle\mathbf{s}, \end{aligned}$$

wobei Terme 2.Ordnung in den Abweichungen und höher vernachlässigt wurden und die Beziehungen $\mathcal{H}_E\triangle\alpha_s = \triangle\mathbf{E}_\mathcal{S}\mathbf{h}, \mathcal{S}_E\triangle\alpha_h = \triangle\mathbf{E}_\mathcal{H}\mathbf{s}$ verwendet wurden. In letzteren Beziehungen sind die Matrizen $E_{HE}$, $\mathcal{S}_E$ von derselben Struktur wie H, $\mathcal{S}$. Das obige Problem wird damit zu einem iterativ lösbarem System:

$$\min_{\triangle\mathbf{h},\triangle\alpha_s} \left\| \left( \begin{array}{cc} \mathcal{H}_E & \mathcal{S} + \mathbf{E}_\mathcal{S} \\ \mathbf{D}_s^{(\lambda)} & 0 \end{array} \right) \left( \begin{array}{c} \triangle\alpha_s \\ \triangle\mathbf{h} \end{array} \right) - \left( \begin{array}{c} \mathbf{r}_h \\ -\mathbf{D}_s^{(\lambda)}\alpha_s \end{array} \right) \right\|_2$$

$$\min_{\triangle\mathbf{s},\triangle\alpha_h} \left\| \left( \begin{array}{cc} \mathcal{S}_E & \mathcal{H} + \mathbf{E}_\mathcal{H} \\ \mathbf{D}_h^{(\lambda)} & 0 \end{array} \right) \left( \begin{array}{c} \triangle\alpha_h \\ \triangle\mathbf{s} \end{array} \right) - \left( \begin{array}{c} \mathbf{r}_s \\ -\mathbf{D}_h^{(\lambda)}\alpha_h \end{array} \right) \right\|_2$$

In der Regel reicht oft schon die einfache Berechnung obiger Gleichungen aus, falls $\lambda$ klein genug gewählt ist. In wenigen Fällen muss öfter iteriert werden. Performanzuntersuchungen zeigen, dass der mean-squared-error (MSE) der Symbole im Mittel über viele Realisierungen beim STLS-Verfahren mit kleinem $\lambda$ nach der 1. Iteration kleiner ist als der aus dem LS-Verfahren.

Die Abbildung 1 zeigt eine Empfängerstruktur mit verfahrensgemäßer Entzerrung von empfangenen Signaldaten.

Es soll kurz und schematisch die Signalverarbeitungskette der Entzerrung, ohne auf Details der Algorithmen einzugehen, skizziert werden.

Das Signal werde mit einer Antenne empfangen, heruntergemischt und analog-digital konvertiert. Die Entzerrung, in der Abbildung unten als hellblauer Block dargestellt, erwartet als Eingangsdaten ein segmentiertes, *M*-fach überabgetastetes ($M \geq 2$, beliebig vorgegeben) Signal, welches ins Basisband heruntergemischt wurde und von dem die Taktrate approximativ bekannt ist.

Es wird dabei angenommen, dass es sich dabei um ein einzelnes Signal handelt. Sollten mehrere Signale innerhalb der betrachteten Bandbreite liegen, so müssten diese zunächst durch Filterung in Raum, Frequenz oder Zeit separiert werden.

Die IQ-Darstellung des zu diesem Zeitpunkt vorliegenden Signals zu den Zeiten $t = nT + k_0 T/M$ (mit beliebigem offset $k_0$) zeigt bei Mehrwegeausbreitung nur eine diffuse Punktwolke.

Die Signalwerte werden dann, wie es bei deterministischen Verfahren üblich ist, in einer bestimmten Abfolge in die sogenannte Signalmatrix geschrieben. Der eigentliche Entzerrprozess besteht dann in der 1. Stufe aus einer Folge von Singulärwertzerlegungen (SVD) dieser Signalmatrix. Danach liegen grobe Schätzwerte der gesuchten entzerrten Symbole vor.

In der 2. Stufe wird ein deterministisches Maximum-Likelihood (DML) Verfahren benutzt, um das Ergebnis noch zu verfeinern. Im Wesentlichen werden auch hier wieder Matrizenoperationen durchgeführt.

Am Ausgang des Entzerrers liegen dann die entzerrten Symbole $s_1, ... , s_N$ vor. In der IQ-Darstellung sollten sich jetzt die diskreten Zustände herausbilden. Aufgrund eines gewissen Rauschpegels im Eingangssignal sind dies natürlich nur Punktwolken.

Danach kann sich die Weiterverarbeitung, d.h. Modulationsartenerkennung sowie Demodulation etc. anschließen.

In einer Monte-Carlo-Simulation mit BPSK-Signalen wurden für einen beispielhaften Kanal Bitfehlerraten bestimmt. Die Kanalantwort besitzt die Werte

| $h_m(l)$ | $m = 1$ | $m = 2$ | $m = 3$ | $m = 4$ |
|---|---|---|---|---|
| $l = 0$ | 2 | 3 | 1 | 1 |
| $l = 1$ | 1 | 1 | 1 | 1 |

Die Blocklänge betrug $N = 100$ und es wurden jeweils 10000 Durchläufe gemacht. Das Verfahren führte genau 3 Iterationen des deterministischen ML-Verfahrens aus. In Abbildung 2 sind die Bitfehlerraten aufgetragen. Die Verbesserung des neuen Maximum-Likelihood Verfahrens beträgt für diesen Kanal ungefähr 5dB.

**Literaturverzeichnis**

[1] 'Special Issue on Blind System Identification and Estimation', eds. R. Liu und L. Tong, Proc. of IEEE 86,10, (1998)

[2] D. N. Godard, 'Self-recovering equalization and carrier tracking in twodimensional data communication systems', IEEE Trans. Comm., 28, S. 1867-1875, (1980)

[3] N. Seshadri, 'Joint data and channel estimation using blind trellis search techniques', IEEE Trans. Comm. 42, S. 1000-1011, (1994)

[4] M. Gosh und C. L. Weber, 'Maximum-likelihood blind equalization', Opt. Eng, 31, Nr. 6, S. 1224-1228, (1992)

[5] F. Alberge, P. Duhamel und M. Nikolova, 'Adaptive Solution for Blind Identification/Equalization Using Deterministic Maximum Likelihood', IEEE Trans. on Sig. Proc., 50, S. 923-936, (2002)

[6] L. Tong, G. Xu und T. Kailath, 'A new approach to blind identification and equalization of multipath channels', presented at 25th Asimolar Conf., Pacific Grove, CA, Nov (1991)

[7] H. Liu und G. Xu, 'A deterministic approach to blind symbol estimation', IEEE Sig. Proc. Lett., 1, S. 205-207, (1994)

[8] S. Van Huffel, H. Park und J. B. Rosen, 'Formulation and Solution of Structured Total Least Norm Problems for Parameter Estimation', IEEE Trans. on Sig. Proc. 44, S. 2464-2474 (1996)

[9] G.H. Golub und C.F. Van Loan, 'Matrix computations', The John Hopkins University Press, (1989)

[10] ALLE-JAN VAN DER VEEN ET AL: "A subspace approach to blind spacetime signal processing for wireless communication systems" IEEE TRANSACTIONS ON SIGNAL PROCESSING, IEEE SERVICE CENTER, NEW YORK, NY, US, Bd. 45, Nr. 1, Januar 1997 (1997-01), XP 011057681 ISSN:1053-587X

[11] DATABASE INSPEC [Online] THE INSTITUTION OF ELECTRICAL ENGINEERS, STEVENAGE, GB; Mär 2000 (2000-03), LEMMERLING P ET AL: "Fast algorithm for solving the Hankel/Toeplitz structured total least squares problem" XP002411864 Database accession no. 671 8291

[12] VANDAELE P ET AL: "Implementation of an RTLS blind equalization algorithm on DSP" NINTH INTERNATIONAL WORKSHOP ON RAPID SYSTEM PROTOTYPING, LEUVEN, BELGIUM, 3. Juni 1998 (1998-06-03), - 5. Juni 1998 (1998-06-05) Seiten 150-155, XP010283202 LOS ALAMITOS, CA, USA ISBN: 0-8186-8479-8

[13] DATABASE INSPEC [Online] THE INSTITUTION OF ELECTRICAL ENGINEERS, STEVENAGE, GB; Januar 1993 (1993-OI), DEGROAT R D ET AL:"The data least squares problem and channel equalization" XP002411863

**Patentansprüche**

1. Verfahren zur nichtkooperativen blinden Entzerrung von digitalen quadratur-amplitudenmodulierten Signalen mit unbekannten Parametern, bei dem:

   a) nach einer deterministischen Prozedur die Symbolsequenz s aus einem empfangenen Datenstrom x ermittelt wird,
   b) danach nach einem Maximum-Likelihood-Verfahren das Funktional

$$d_{ML}(h, s) = \|x - h * s\|^2,$$

   wobei h die Kanalantwort ist, über dem Raum der Funktionen h, s minimiert wird, **dadurch gekennzeichnet,**
   c) **dass** dabei die ML-Gleichungen, welche durch Diskretisierung von h, s gleichzeitig Hankel- und Block-Toeplitzmatrizen $H, S$ entfalten

$$d_{ML}(h, s) = \|\mathbf{x} - \mathcal{S}\mathbf{h}\|^2 = \|\mathbf{x} - \mathcal{H}\mathbf{s}\|^2,$$

   minimiert werden,
   und **dass**
   die Minimierung mit der Methode der structured total least squares, STLS, mit einem Parameter λ erfolgt, wobei abwechselnd iterativ nach den Lösungen von

$$\min_{\mathbf{E}_\mathcal{S}, \mathbf{h}} \|[\lambda \mathbf{E}_\mathcal{S} | - \mathbf{r}_h]\|_F \quad \text{mit} \quad \mathbf{r}_h = \mathbf{x} - (\mathcal{S} + \mathbf{E}_\mathcal{S})\mathbf{h}$$

   und

$$\min_{\mathbf{E}_\mathcal{H}, \mathbf{s}} \|[\lambda \mathbf{E}_\mathcal{H} | - \mathbf{r}_s]\|_F \quad \text{mit} \quad \mathbf{r}_s = \mathbf{x} - (\mathcal{H} + \mathbf{E}_\mathcal{H})\mathbf{s}$$

   gesucht wird, wobei λ ein Gewichtungsfaktor ist, der bestimmt, wie stark die Änderung $\mathbf{E}_s$ bzw. $\mathbf{E}_H$ der Matrix $H$ bzw. $S$ ist.

2. Verfahren nach Anspruch 1, welches von einem linearen Kanalmodell ausgeht bei dem die Kanallänge L.T beträgt, wobei L ein Integer und T die Symboldauer ist, und für die Empfangsdaten $x_i(k)$ das Datenmodell bei dem i, k Integer sind und j = N-i-L+1, wobei N die Länge des betrachteten Sendesignals ist,

$$
\begin{bmatrix}
\mathbf{x}_1 & \cdots & \mathbf{x}_j \\
\mathbf{x}_2 & \cdots & \mathbf{x}_{j+1} \\
\vdots & & \vdots \\
\mathbf{x}_i & \cdots & \mathbf{x}_{j+i-1}
\end{bmatrix}
=
\begin{bmatrix}
H & 0 & 0 & \cdots \\
0 & H & 0 & \cdots \\
 & \cdot & & \ddots \\
0 & 0 & \cdots & H
\end{bmatrix}
\begin{bmatrix}
s(1-L) & \cdots & s(j-L) \\
s(2-L) & \cdots & s(1-L+j) \\
\vdots & & \vdots \\
s(i) & \cdots & s(i+j-1)
\end{bmatrix}
$$

mit

$$
\mathbf{x}_k =
\begin{bmatrix}
x_1(k) \\
\vdots \\
\vdots \\
x_M(k)
\end{bmatrix}
=
\underbrace{
\begin{bmatrix}
h_1(L) & \cdots & h_1(1) & h_1(0) \\
\vdots & & & \vdots \\
\vdots & & & \vdots \\
h_M(L) & \cdots & h_M(1) & h_M(0)
\end{bmatrix}
}_{H}
\begin{bmatrix}
s(k-L) \\
\vdots \\
\vdots \\
s(k)
\end{bmatrix}
\Bigg)
$$

wobei M die Abtastrate ist, kurz

$$
\mathbf{X} = \mathcal{H}\mathbf{S}
$$

aufgestellt werden kann, bei dem zunächst eine Näherung für die Symbole s(i) ermittelt wird, bei deren Berechnung zunächst mittels einer Singulärwertzerlegung von X

$$
\mathbf{X} = \mathbf{U} \cdot \mathbf{\Sigma} \cdot \mathbf{V}^H = \begin{bmatrix} \mathbf{U}^s \mathbf{U}^\perp \end{bmatrix} \cdot \begin{bmatrix} \mathbf{\Sigma}^s & 0 \\ 0 & \mathbf{\Sigma}^\perp \end{bmatrix} \cdot \begin{bmatrix} \mathbf{V}^{sH} \\ \mathbf{V}^{\perp H} \end{bmatrix}
$$

der Zeilenraum $V^1$ berechnet wird, um damit dann durch Minimierung von

$$
\min_{\mathbf{s}} \left\| \mathbf{s}^t \cdot \begin{bmatrix} \mathbf{V}^\perp & 0 & \cdots & 0 \\ 0 & \mathbf{V}^\perp & & \\ \vdots & & \ddots & \\ 0 & & & \mathbf{V}^\perp \end{bmatrix} \right\| ,
$$

wobei s = ($s$(1-$L$), ...., $s$($N$+1-$L$))$^t$ mit $N=i+j$-1+$L$, die Näherung für die Symbole $s$($i$) zu erhalten, und danach diese Näherung für die Symbole $s$($i$) verbessert wird durch iterative Least-Squares-Minimierung des Funktionals

$$
\begin{aligned}
d_{ML}(\mathbf{s}) &= \left\| \mathbf{X}^t - \mathbf{S}^t \mathcal{H}^t \right\|^2 \\
&= \left\| \mathbf{X} - \mathcal{H}\mathbf{S} \right\|^2
\end{aligned}
$$

abwechselnd nach $H^t = (S^t)^\dagger X^t$ und $S = H^\dagger X$ mit Erzeugung der speziellen Blockstruktur von H beziehungsweise der Hankelstruktur von S durch Mittelwertbildung nach jedem Minimierungsschritt..

3.  Computerprogramm mit Programmcode-Mitteln, um alle Schritte gemäß Anspruch 1 oder 2 durchzuführen, wenn das Programm auf einem Computer ausgeführt wird.

**4.** Computerprogramm mit Programmcode-Mitteln gemäß Anspruch 3, die auf einem computerlesbaren Datenträger gespeichert sind.

**Claims**

**1.** Method for the non-cooperative blind equalization of digital quadrature-amplitude-modulated signals with unknown parameters, in which:

a) the symbol sequence s is determined from a received data stream x according to a deterministic procedure,
b) the functional $d_{ML}(h, s) = \|x - h * s\|^2$, where h is the channel response,
is then minimized over the space of the functions h, s according to a maximum likelihood method,
**characterized**
c) **in that** the ML equations, which simultaneously contain Hankel and block Toeplitz matrices H, S

$$d_{ML}(h, s) = \|x - Sh\|^2 = \|x - Hs\|^2$$

as a result of discretization of h, s, are minimized,
and **in that** the minimization is carried out using the structured total least squares, STLS, method with a parameter $\lambda$, in which case a search for the solutions to

$$\min_{E_s, h} \|[\lambda E_s \mid -r_h]\|_F \quad \text{where } r_h = x - (S + E_S) h$$

and

$$\min_{E_H, s} \|[\lambda E_H \mid -r_s]\|_F \quad \text{where } r_s = x - (H + E_H) s$$

is alternately iteratively carried out, where $\lambda$ is a weighting factor which determines the extent of the change in $E_s$ or $E_H$ in the matrix H or S.

**2.** Method according to Claim 1, which is based on a linear channel model, in which the channel length is $L \cdot T$, where L is an integer and T is the symbol duration, and the data model

$$\begin{bmatrix} x_1 & \cdots & x_j \\ x_2 & \cdots & x_{j+1} \\ \vdots & & \vdots \\ x_i & \cdots & x_{j+i-1} \end{bmatrix} = \begin{bmatrix} H & 0 & 0 & \cdots \\ 0 & H & 0 & \cdots \\ & & \ddots & \\ 0 & 0 & \cdots & H \end{bmatrix} \begin{bmatrix} s(1-L) & \cdots & s(j-L) \\ s(2-L) & \cdots & s(1-L+j) \\ \vdots & & \vdots \\ s(i) & \cdots & s(i+j-1) \end{bmatrix}$$

where

$$x_k = \begin{bmatrix} x_1(k) \\ \vdots \\ \vdots \\ x_M(k) \end{bmatrix} = \underbrace{\begin{bmatrix} h_1(L) & \cdots & h_1(1) & h_1(0) \\ \vdots & & & \vdots \\ \vdots & & & \vdots \\ h_M(L) & \cdots & h_M(1) & h_M(0) \end{bmatrix}}_{H} \begin{bmatrix} s(k-L) \\ \vdots \\ \vdots \\ s(k) \end{bmatrix}$$

where M is the sampling rate,

$$X = HS$$

for short,

in which i, k are integers and j = N-i-L+1, where N is the length of the transmission signal in question, can be set up for the received data $x_i(k)$, in which an approximation for the symbols s(i) is first of all determined, during the calculation of which the row space V⊥ is first of all calculated by means of a singular value decomposition of X

$$X = U \cdot \Sigma \cdot V^H = [U^3 U^\perp] \cdot \begin{bmatrix} \Sigma^S & 0 \\ 0 & \Sigma^\perp \end{bmatrix} \cdot \begin{bmatrix} V^{sH} \\ V^{\perp H} \end{bmatrix}$$

in order to thus then obtain the approximation for the symbols s(i) by minimizing

$$\min_s \left\| s^t \cdot \begin{bmatrix} V^\perp & 0 & \cdots & 0 \\ 0 & V^\perp & & \\ \vdots & & \ddots & \\ 0 & & & V^\perp \end{bmatrix} \right\|$$

where s=(s(1-L), ..., s(N+1-L))^t where N=i+j-1+L, and this approximation for the symbols s(i) is then improved by means of iterative least squares minimization of the functional

$$d_{ML}(s) = \left\| X^t - S^t H^t \right\|^2$$
$$= \left\| X - HS \right\|^2$$

alternately according to $H^t = (S^t)^\dagger X^t$ and $S = H^\dagger X$ with generation of the special block structure of H or the Hankel structure of S by means of averaging after every minimization step.

3. Computer program having program code means in order to carry out all of the steps according to Claim 1 or 2 when the program is executed on a computer.

4. Computer program having program code means according to Claim 3 which are stored on a computer-readable data storage medium.

**Revendications**

1. Procédé d'égalisation aveugle non-coopérative de signaux numériques MAQ (modulés en amplitude et en quadrature) avec des paramètres inconnus, dans lequel :

   a) on détermine selon une procédure déterministe, la séquence s des symboles à l'intérieur d'un flux de données x reçu,
   b) on minimise ensuite selon un procédé du maximum de vraisemblance, la fonction

$$d_{ML}(h, s) = \left\| x - h * s \right\|^2,$$

dans laquelle h est la réponse du canal, dans l'espace des fonctions h, s,
**caractérisé**
c) **en ce qu'**on y minimise les équations ML qui par discrétisation de h, s, contiennent simultanément des matrices de Toeplitz de Hankel et de Block H, S,

$$d_{ML}(h,\ s)\ =\ \left\|\mathrm{x}\ -\ \mathrm{Sh}\right\|^2\ =\ \left\|\mathrm{x}\ -\ \mathrm{H}\,\mathrm{s}\right\|^2,$$

**en ce que** la minimisation s'effectue par la méthode des moindres carrés totaux structurés STLS (Structured Total Least Squares) et avec un paramètre $\lambda$, dans laquelle on cherche alternativement de manière itérative, les solutions de

$$\min_{\mathbf{E}_S,\mathbf{h}}\|[\lambda\mathbf{E}_S|-\mathbf{r}_h]\|_F \quad \text{mit} \quad \mathbf{r}_h = \mathbf{x} - (S + \mathbf{E}_S)\mathbf{h}$$

et de

$$\min_{\mathbf{E}_{\mathcal{H}},\mathbf{s}}\|[\lambda\mathbf{E}_{\mathcal{H}}|-\mathbf{r}_s]\|_F \quad \text{mit} \quad \mathbf{r}_s = \mathbf{x} - (\mathcal{H} + \mathbf{E}_{\mathcal{H}})\mathbf{s}$$

dans lesquelles $\lambda$ est un facteur de pondération qui définit la grandeur de la modification $E_s$ respectivement $E_H$ de la matrice H, respectivement S.

2. Procédé selon la revendication 1, partant d'un modèle de canal linéaire dans lequel la longueur L du canal vaut T, L étant un entier et T la durée du symbole, et qui permet d'élaborer le modèle de données des données de réception $x_i(k)$ dans lequel i, k sont des entiers et $j=N\text{-}i\text{-}L+1$, N étant la longueur du signal d'émission considéré,

$$\begin{bmatrix} x_1 & \cdots & x_j \\ x_2 & \cdots & x_{j+1} \\ \vdots & & \vdots \\ x_i & \cdots & x_{j+i-1} \end{bmatrix} = \begin{bmatrix} H & 0 & 0 & \cdots \\ 0 & H & 0 & \cdots \\ & \ddots & \ddots & \\ 0 & 0 & \cdots & H \end{bmatrix} \begin{bmatrix} s(1-L) & \cdots & s(j-L) \\ s(2-L) & \cdots & s(1-L+j) \\ \vdots & & \vdots \\ s(i) & \cdots & s(i+j-1) \end{bmatrix}$$

avec

$$\mathbf{x}_k = \begin{bmatrix} x_1(k) \\ \vdots \\ \vdots \\ x_M(k) \end{bmatrix} = \underbrace{\begin{bmatrix} h_1(L) & \cdots & h_1(1) & h_1(0) \\ \vdots & & & \vdots \\ \vdots & & & \vdots \\ h_M(L) & \cdots & h_M(1) & h_M(0) \end{bmatrix}}_{H} \begin{bmatrix} s(k-L) \\ \vdots \\ \vdots \\ s(k) \end{bmatrix} \Big)$$

M étant la fréquence de lecture, en résumé

$$\mathrm{X}\ =\ \mathrm{HS}$$

dans lequel on détermine d'abord un rapprochement pour les symboles s(i) dans un calcul dans lequel on calcule d'abord l'espace des lignes $V\perp$ au moyen d'une décomposition des valeurs singulières de X

$$\mathbf{X} = \mathbf{U} \cdot \boldsymbol{\Sigma} \cdot \mathbf{V}^H = [\mathbf{U}^s \mathbf{U}^\perp] \cdot \begin{bmatrix} \boldsymbol{\Sigma}^s & 0 \\ 0 & \boldsymbol{\Sigma}^\perp \end{bmatrix} \cdot \begin{bmatrix} \mathbf{V}^{sH} \\ \mathbf{V}^{\perp H} \end{bmatrix}$$

et pour obtenir ensuite le rapprochement des symboles s(i) par minimisation de

$$\min_{\mathbf{s}} \left\| \mathbf{s}^t \cdot \begin{bmatrix} \mathbf{V}^\perp & 0 & \cdots & 0 \\ 0 & \mathbf{V}^\perp & & \\ \vdots & & \ddots & \\ 0 & & & \mathbf{V}^\perp \end{bmatrix} \right\| \; ,$$

dans lequel s = $(s(1\text{-}L), \ldots ,s(N+1\text{-}L))^t$ avec $N = i+j\text{-}1+L$, et on améliore ensuite ce rapprochement des symboles s(i) par minimisation itérative des moindres carrés de la fonction

$$d_{ML}(\mathbf{s}) = \left\| \mathbf{X}^t - \mathbf{S}^t \mathbf{H}^{\;t} \right\|^2 ,$$
$$= \left\| \mathbf{X} - \mathbf{H}\mathbf{S} \right\|^2$$

alternativement selon $\mathbf{H}^t = (\mathbf{S}^t)^\dagger \mathbf{X}^t$ et $\mathbf{S} = \mathbf{H}^\dagger \mathbf{X}$ avec génération de structure spéciale de blocs de **H** respectivement de la structure de Hankel de **S** par la formation de la valeur moyenne après chaque étape de minimisation.

3. Programme d'ordinateur avec des moyens de codes de programmes pour exécuter toutes les étapes selon la revendication 1 ou 2, lorsqu'on exécute le programme sur un ordinateur.

4. Programme d'ordinateur avec des moyens de codes de programmes selon la revendication 3, qui sont stockés sur un support de données lisible par ordinateur.

Abbildung 1: Empfängerstruktur mit Entzerrung

Abbildung 2: Bitfehlerrate im Vergleich zwischen deterministischem und zusätzlichem determinisit-schen Maximum-Likelihood-Entzerrer

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Special Issue on Blind System Identification and Estimation. Proc. of IEEE. 1998, vol. 86,
- **D. N. Godard.** Self-recovering equalization and carrier tracking in twodimensional data communication systems. *IEEE Trans. Comm,* 1980, vol. 28, 1867-1875
- **N. Seshadri.** Joint data and channel estimation using blind trellis search techniques. *IEEE Trans. Comm,* 1994, vol. 42, 1000-1011
- **M. Gosh ; C. L. Weber.** Maximum-likelihood blind equalization. *Opt. Eng,* 1992, vol. 31 (6), 1224-1228
- **F. Alberge ; P. Duhamel ; M. Nikolova.** Adaptive Solution for Blind Identification/Equalization Using Deterministic Maximum Likelihood. *IEEE Trans. on Sig. Proc.,* 2002, vol. 50, 923-936
- **L. Tong ; G. Xu ; T. Kailath.** A new approach to blind identification and equalization of multipath channels. *25th Asimolar Conf.,* November 1991
- **H. Liu ; G. Xu.** A deterministic approach to blind symbol estimation. *IEEE Sig. Proc. Lett,* 1994, vol. 1, 205-207
- **S. Van Huffel ; H. Park ; J. B. Rosen.** Formulation and Solution of Structured Total Least Norm Problems for Parameter Estimation. *IEEE Trans. on Sig. Proc.,* 1996, vol. 44, 2464-2474
- **G.H. Golub ; C.F. Van Loan.** Matrix computations. The John Hopkins University Press, 1989
- **ALLE-JAN VAN DER VEEN et al.** A subspace approach to blind spacetime signal processing for wireless communication systems. *IEEE TRANSACTIONS ON SIGNAL PROCESSING,* Januar 1997, vol. 45
- **LEMMERLING P et al.** THE INSTITUTION OF ELECTRICAL ENGINEERS. *Fast algorithm for solving the Hankel/Toeplitz structured total least squares problem,* 20000300
- **VANDAELE P et al.** Implementation of an RTLS blind equalization algorithm on DSP. *NINTH INTERNATIONAL WORKSHOP ON RAPID SYSTEM PROTOTYPING,* 03. Juni 1998, 150-155
- **DEGROAT R D et al.** The data least squares problem and channel equalization. *THE INSTITUTION OF ELECTRICAL ENGINEERS,* Januar 1993